# EUROPÄISCHE PATENTSCHRIFT

(11) **EP 0 587 684 B1**
(45) Veröffentlichungstag und Bekanntmachung des Hinweises auf die Patenterteilung: **13.12.1995**
(21) Anmeldenummer: 92911718.2
(22) Anmeldetag: 05.06.1992
(51) Int. Cl.: C03C 17/00, B05D 7/22

(54) **VERFAHREN UND VORRICHTUNG ZUR INNENBESCHICHTUNG VON MÄANDERFÖRMIGEN EINROHRGLASGEFÄSSEN MIT EINER SUSPENSION**
PROCESS AND DEVICE FOR COATING WITH A SUSPENSION THE INSIDE OF MEANDROUS ONE-TUBE GLASS VESSELS
PROCEDE ET DISPOSITIF POUR REVETIR AVEC UNE SUSPENSION L'INTERIEUR DE RECIPIENTS SINUEUX MONOTUBULAIRES EN VERRE

(30) Priorität: 06.06.1991 DE 4119853
(43) Veröffentlichungstag der Anmeldung: 23.03.1994
(73) Patentinhaber: PROLUX MASCHINENBAU GMBH, 13053 Berlin (DE)
(72) Erfinder: BERNICKE, Erhard, D-1120 Berlin (DE); DAME, Jürgen, D-1141 Berlin (DE); MÜNCHHAUSEN, Rainer, D-1095 Berlin (DE)
(74) Vertreter: Ninnemann, Detlef, Dipl.-Ing.
(86) Internationale Anmeldenummer: DE9200483
(87) Internationale Veröffentlichungsnummer: WO9221631

(56) Entgegenhaltungen:
- CH-A- 277 643
- GB-A- 2 057 917
- LU-A- 46 593
- PEINTURES-PIGMENTS-VERNIS Bd. 44, Nr. 1, Januar 1965, Seite 65; 'EXAMPLES DE TRAVAUX: PAINT TECHNOLOGY, 1975, VOL. 31, No. 11, page 55"
- TRAVAUX: PAINT TECHNOLOGY, 1975, VOL 31, NO. 11, PAGE 55'

## Beschreibung

Die Erfindung betrifft ein Verfahren zur Innenbeschichtung von mäanderförmigen Einrohrglasgefäßen mit einer Suspension und eine Vorrichtung zur Durchführung des Verfahrens.

Unter "mäanderförmig" bzw. "in Mäanderform" im Sinne der Erfindung ist zu verstehen: in fortlaufender Verbindung U-förmig gefaltet.

Niederdruckentladungslampen, insbesondere Leuchtstofflampen, werden in großem Umfang zur elektrischen Lichterzeugung eingesetzt. Verglichen mit Glühlampen zeichnen sie sich durch eine hohe Lichtausbeute sowie eine lange Lebensdauer aus.

Die Lichterzeugung bei Niederdruckentladungslampen erfolgt über den Prozess einer Gasentladung in einem Entladungsgefäß: In einem elektrischen Feld beschleunigte Elektronen regen durch Stöße Gasatome an, welche die aufgenommene Anregungsenergie nach kurzer Zeit in Form von UV-Lichtquanten wieder abgeben, welche ihrerseits in einem Leuchtstoff, der auf den Innenwänden des Entladungsgefäßes aufgebracht ist, in sichtbares Licht umgewandelt werden.

Verfahren zum Beschichten der Innenseiten bekannter Entladungsgefäße, etwa stabförmiger oder U-förmiger Glasrohre mit Leuchtstoff sind bekannt. Die bekannten Verfahren folgen dem Prinzip "Füllen und Trocknen" bzw. "Füllen, Umstürzen und Trocknen": Eine Suspension wird in ein Entladungsgefäß gegossen, gesprüht oder pneumatisch gedrückt. Diesen Vorgang bezeichnet man als Beschlämmen des Entladungsgefäßes. Anschließend läuft die überschüssige Suspension, eventuell nach Umstürzen des Entladungsgefäßes, auf natürliche Weise aus dem Entladungsgefäß wieder heraus. Ein Trocknungsprozeß schließt sich an.

Eine derartige Vorgehensweise ist bei Entladungsgefäßen, die sich durch eine einfache geometrische Form auszeichnen, ausreichend.

Leuchtstofflampen, die sich im Gegensatz zu den herkömmlichen stabförmigen Leuchtstofflampen durch ein gefaltetes Entladungsgefäß und damit kleine Abmessungen auszeichnen, werden als Kompaktlampen bezeichnet.

Das Entladungsgefäß wird bei den bekannten Kompaktlampen durch eine Aneinanderreihung von zwei oder mehr U-Rohren realisiert, wobei zwei U-Rohre durch eine lochartige Verbindungsstelle an je einem ihrer Schenkel miteinander verbunden sind. Derartige Entladungsgefäße können nach dem Prinzip "Füllen, Umstürzen, und Trocknen" nicht als Ganzes beschlämmt werden. Stattdessen werden die einzelnen U-Rohre beschlämmt, bevor sie zum Entladungsgefäß zusammengefügt werden. Die lochartigen Verbindungsstellen der U-Rohre, die erst nach dem Beschlämmen entstehen, sind deshalb notwendigerweise nicht oder nur minimal mit Leuchtstoff beschichtet. Ein solcher Zustand muß als unbefriedigend bezeichnet werden.

Einrohrglasgefäße in Mäanderform sind Gegenstand der deutschen Patentanmeldung P 41 19 852.2 "Verfahren und Vorrichtung zur Herstellung von Einrohrglasgefäßen in Mäanderform" sowie der deutschen Patentanmeldung P 42 14 542.2 "Mehrfach gefaltete Einrohrglasgefäße sowie Vorrichtung und Verfahren zu deren Herstellung" der Anmelderin. Es handelt sich dabei um mehrfach gefaltete Einrohrglasgefäße mit mindestens vier parallel zueinander angeordneten geraden Teilstücken, die durch U-förmige Abschnitte miteinander verbunden sind und deren beiden offenen Rohrenden benachbart liegen.

Derartige Gefäße sind insbesondere als Entladungsgefäße für Kompaktlampen geeignet. Sie zeichnen sich gegenüber den bekannten Entladungsgefäßen für Kompaktlampen durch im wesentlichen konstante Wanddicken und einen im wesentlichen fortlaufend konstanten Durchmesser aus, d.h. sie weisen keine Engstellen und keine Toträume auf.

Verfahren zum gleichmäßigen Beschichten der Innenwände von Einrohrglasgefäßen in Mäanderform mit einer Suspension sind nicht bekannt. Es gibt keinen einschlägigen Stand der Technik.

Einrohrglasgefäße in Mäanderform können nach dem Prinzip "Füllen, Umstürzen und Trocknen" nicht gleichmäßig fehlerfrei beschichtet werden. So würde die Suspension beim Einfüllen in das Einrohrglasgefäß bzw. beim Herauslaufen aus dem Einrohrglasgefäß in dessen Bögen und Schenkein derart verwirbelt, daß störende Luftblasen entstünden. Suspensionen sind in ihrer Handhabung auf Grund ihrer chemischen und physikalischen Eigenschaften sehr schwierig; so neigen sie leicht zu Bläschen- und Schlierenbildung. Eine gleichmäßige Beschichtung erfordert eine kontinuierliche wirbelfreie Beschlämmung.

Auch würde überschüssige Suspension beim Umstürzen nicht gleichmäßig aus dem Einrohrglasgefäß herauslaufen, sondern sich in den Bögen und Schenkeln des Gefäßes ungleichmäßig ansammeln.

Der Erfindung liegt die Aufgabe zu Grunde, ein Verfahren und eine Vorrichtung zum gleichmäßigen Beschichten der Innenflächen von Einrohrglasgefäßen in Mäanderform mit einer Suspension zu schaffen.

Erfindungsgemäß wird diese Aufgabe durch die kennzeichnenden Teile der Ansprüche 1 und 9 gelöst.

Erfindungsgemäß durchläuft ein Einrohrglasgefäß in Mäanderform nach Zugabe einer dosierten Menge Suspension in einen der beiden offenen Schenkel eine Horizontal- und eine Auf- und Abbewegung. Gleichzeitig rotiert das Einrohrglasgefäß axial parallel zu einer durch die geraden Teilstücke des mäanderförmigen Einrohrglasgefäßes definierten Längsachse. Die Schenkel des Einrohrglasgefäßes nehmen zwischen den Umkehrpunkten der Auf- und Abbewegung eine horizontale Lage ein. Nach Ablauf der Bewegung wird das Einrohrglasgefäß mit den offenen Rohrenden nach unten getrocknet.

Das erfindungsgemäße Verfahren ermöglicht im Gegensatz zu den bekannten Verfahren die gleichmäßige Innenbeschichtung von Einrohrglasgefäßen in Mäanderform mit einer Suspension.

Durch die geraden Teilstücke des mäanderförmigen Einrohrglasgefäßes wird eine Längsachse definiert. Eine axiale Rotation eines mäanderförmigen Einrohrglasgefäßes im Sinne der Erfindung ist eine Rotation um eine Achse, die parallel zu den geraden Teilstücken des Einrohrglasgefäßes und insbesondere durch den Schwerpunkt des Einrohrglasgefäßes verläuft.

Besonders vorteilhaft ist es, wenn sich das Einrohrglasgefäß in Mäanderform während der Antrocknung der Suspension in vertikaler, ruhiger Lage befindet.

Es liegt im Rahmen der Erfindung, daß das Einrohrglasgefäß in Mäanderform nach der Beschichtung mit einer Suspension mit den Rohrenden nach unten in eine Trockenstrecke eintritt. Dabei erfolgt ein Abtropfen überschüssiger Suspension sowie ein gleichmäßiges Trocknen der Suspension. Mit beginnt die Antrocknung der Suspension dabei an den oben liegenden U-Bögen des Einrohrglasgefäßes in Mäanderform.

In einer bevorzugten Ausführungsform erfolgt die Antrocknung der Suspension mittels trockener Warmluft oder Wärmestrahlung.

Mit besonderem Vorteil durchläuft die Suspension das Einrohrglasgefäß in Mäanderform während der Beschichtung mehrmals, vorzugsweise zwei- bis viermal, vorwärts- und rückwärts.

Auch ist es vorteilhaft, wenn die dosierte Menge Suspension, die in einen der offenen Schenkel des Einrohrglasgefäßes in Mäanderform zugegeben wird, der für die Beschichtung benötigten Menge entspricht.

Es liegt im Rahmen der Erfindung, daß Einrohrglasgefäße in Mäanderform mit Rohrdurchmessern größer als 8 mm beschichtet werden.

Mit besonderem Vorteil wird das erfindungsgemäße Verfahren zur Innenbeschichtung von Einrohrglasgefäßen in Mäanderform verwendet, die als Entladungsgefäße für der Herstellung von Kompaktlampen benutzt werden. Als Suspension wird dabei insbesondere eine Leuchtstoffsuspension verwendet.

Eine Vorrichtung zur Durchführung des Verfahrens besteht aus einem Kettenförderer, Glasgefäßaufnahmen, Rotationsvorrichtungen, einer Dosiereinrichtung und einer Trockenstrecke. Erfindungsgemäß ist je eine Glasgefäßaufnahme mit integrierter Kurvenscheibe über ein Gelenk mit vertikalem Freiheitsgrad in regelmäßigen Abständen an einem endlosen Kettentrieb befestigt. Vor der Trockenstrecke sind Rotationsvorrichtungen angeordnet, um die Glasgefäßaufnahmen nacheinander in gegenläufige Rotation bei gleichzeitiger Kippbewegung zu versetzen.

Die Rotationsvorrichtungen laufen parallel zum Kettentrieb. Sie liegen des weiteren in der durch den Kettentrieb definierten Ebene. Der erfindungsgemäße Bewegungsablauf einer Glasgefäßaufnahme und damit des Glasgefäßes ergibt sich über das Antriebselement einer Kopplung der integrierten Kurvenscheibe mit den Rotationsvorrichtungen. Die Rotationsgeschwindigkeit und -richtung einer Glasgefäßaufnahme folgt dabei aus der Relativgeschwindigkeit zwischen Kettentrieb und Rotationsvorrichtung.

Eine Dosiereinrichtung, die vor den Rotationsvorrichtungen angeordnet ist, füllt Suspension in einen der offenen Schenkel des Glasgefäßes. Mittels Kettentrieb und Rotationsvorrichtungen wird die entsprechende Glasgefäßaufnahme mit integrierter Kurvenscheibe derart bewegt, daß eine gleichmäßige Beschichtung des Glasgefäßes mit Suspension erfolgt. Nach Passieren der Rotationvorrichtungen wird die Glasgefäßaufnahme über Schienen nach unten geführt, so daß die offenen Enden des Glasgefäßes nach unten zeigen. In dieser Lage tritt die Gefäßaufnahme in eine Trockenstrecke ein. Nach Passieren der Trockenstrecke wird das Glasgefäß der Glasgefäßaufnahme entnommen.

Mit besonderem Vorteil sind die Glasgefäßaufnahmen auf einem Gelenk kugelgelagert. Die Rotationsvorrichtungen sind bevorzugt als Drehrichtungsbänder ausgebildet.

In einer bevorzugten Ausführungsform ist die Trockenstrecke als Warmluft- oder als Strahlungstunnel ausgebildet.

In einer vorteilhaften Ausgestaltung wird die Relativgeschwindigkeit zwischen Kettentrieb und Rotationsvorrichtung derart gewählt, daß eine Glasgefäßaufnahme entlang einer Rotationsvorrichtung mehrmals, insbesondere drei- bis fünfmal um die eigene Achse rotiert.

Die integrierte Kurvenscheibe besitzt mit Vorteil eine derartige ovale Form, daß die Kippbewegung der Gefäßaufnahme sinusförmig erfolgt.

Es liegt im Rahmen der Erfindung, daß die integrierten Kurvenscheiben über eine Reibungskopplung von den Rotationsvorrichtungen bewegt werden.

Mit Vorteil sind mehrere Rotationsvorrichtungen, insbesondere zwei bis vier hintereinander angeordnet.

Die Erfindung soll nachfolgend unter Bezugnahme auf die Figuren der Zeichnung an einem Ausführungsbeispiel näher erläutert werden.

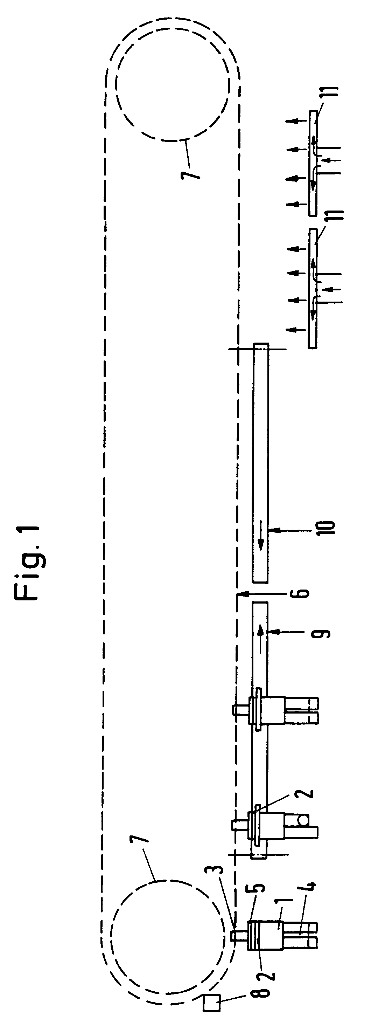

Es zeigen
- Fig.1: Eine schematische Darstellung einer Vorrichtung zur Durchführung des Verfahrens und
- Fig.2: Eine schematische Darstellung des Bewegungsablaufes des Einrohrglasgefäßes in Mäanderform.

Eine Glasgefäßaufnahme 1 mit integrierter Kurvenscheibe 2 ist über ein vertikal bewegliches Gelenk 3 an einer Kette 6 befestigt, die über Kettenräder 7 angetrieben wird. Die Kette 6 und die Kettenräder 7 bilden einen endlosen Kettentrieb. Die Glasgefäßaufnahme ist auf einem Kugellager 5 kugelgelagert, so daß sie um die eigene Achse rotieren kann.

Das Glasgefäß 4 wird von der Glasgefäßaufnahme aufgenommen. Eine Dosiereinrichtung 8 füllt Suspension in einen der offenen Schenkel des Glasgefäßes. Dabei befindet sich dieser Schenkel in einer schräg aufrechten Lage.

Hinter der Dosiereinrichtung sind hintereinander zwei Drehrichtungsbänder 9 und 10 parallel zum Kettentrieb angeordnet. Die Drehgeschwindigkeit der Drehrichtungsbänder ist bei einem der beiden Bänder größer als die Geschwindigkeit des Kettentriebes und bei dem anderen Band kleiner als die Geschwindigkeit des Kettentriebes, so daß sich zwei von der Richtung entgegengesetzte Relativgeschwindigkeiten ergeben.

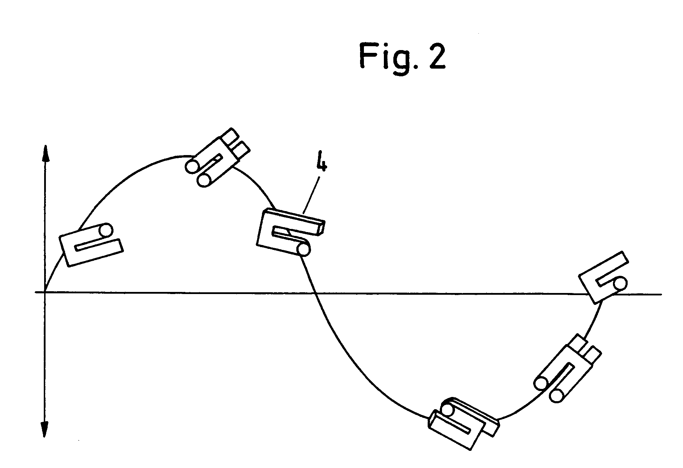

Die Glasgefäßaufnahme 1 wird von der Kette 6 auf das Drehrichtungsband 9 geführt. Eine Rotation sowie eine Kippbewegung der Glasgefäßaufnahme 1 ergibt sich über das Antriebselement einer Reibungskopplung der integrierten Kurvenscheibe 2 mit dem Drehrichtungsband 9. Aufgrund der Relativgeschwindigkeit zwischen der Kurvenscheibe 2 und dem Drehrichtungsband 9 wird die Kurvenscheibe 2 und damit das Glasgefäß 4 in Rotation versetzt. Zusätzlich zu der Rotationsbewegung führt die Glasgefäßaufnahme 2 eine Kippbewegung durch, die durch die Form der Kurvenscheibe 2 bestimmt ist. Im Ausführungsbeispiel besitzt die integrierte Kurvenscheibe 2 eine ovale Form, so daß die Kippbewegung der Kurvenscheibe 2 sinusförmig erfolgt (Fig. 2).

Die Relativgeschwindigkeit zwischen Kettentrieb 6 und den Drehrichtungsbändern 9 bzw. 10 ist so gewählt, daß die Glasgefäßaufnahme entlang der Drehrichtungsbänder drei- bis fünfmal um die eigene Achse rotiert. Dadurch wird gewährleistet, daß die Suspension gleichmäßig an der Innenwand des Glasgefäßes verteilt wird.

Wenn die Glasgefäßaufnahme 1 durch die fortlaufende Bewegung der Kette das Ende des Drehrichtungsbands 9 erreicht, hat sich die noch vorhandene Suspension in dem offenen Schenkel angesammelt, in den die Suspension zuvor nicht eingefüllt wurde.

Weiter wird die Glasgefäßaufnahme 1 auf das Drehrichtungsband 10 geführt. Über die Kopplung der integrierten Kurvenscheibe 2 an das Drehrichtungsband 10 wird die Glasgefäßaufnahme 1 in vorbeschriebener Weise bewegt, jedoch erfolgt die Rotation der Glasgefäßaufnahme 1 aufgrund einer anderen Relativgeschwindigkeit zwischen Kette 6 und Drehrichtungsband 10 in, verglichen mit der Bewegung beim Drehrichtungsband 9, umgekehrter Richtung.

Nach Passieren des Drehrichtungsbandes 10 wird die Glasgefäßaufnahme über Schienen nach unten geführt, so daß die offenen Enden des Glasgefäßes nach unten zeigen. In dieser Lage tritt die Glasgefäßaufnahme in eine Trockenstrecke ein, die aus mehreren Warmluftstationen 11 besteht. Hinter der Trockenstrecke wird das Glasgefäß der Glasgefäßaufnahme entnommen.

## Patentansprüche

1. Verfahren zum Beschichten der Innenflächen eines mäanderförmigen Einrohrglasgefäßes mit Suspensionen, insbesondere Leuchtstoffsuspensionen,
**dadurch gekennzeichnet**,
daß das Einrohrglasgefäß nach Zugabe einer dosierten Menge Suspension in einen der offenen Schenkel axial *parallel zu einer durch die geraden Teilstücke des mäanderförmigen Einrohrglasgefäßes definierten Längsachs*e rotierend eine Horizontal- und eine Kippbewegung durchläuft, wobei die Schenkel des Einrohrglasgefäßes zwischen den Umkehrpunkten der Kippbewegung eine horizontale Lage einnehmen und das Einrohrglasgefäß anschließend mit den offenen Rohrenden nach unten getrocknet wird.

2. Verfahren nach Anspruch 1, **dadurch gekennzeichnet**, daß das Einrohrglasgefäß sich während der Antrocknung der Suspension in vertikaler, ruhiger Lage befindet.

3. Verfahren nach Anspruch 1 oder 2, **dadurch gekennzeichnet**, daß das Einrohrglasgefäß nach der Beschichtung mit einer Suspension mit den offenen Rohrenden nach unten in eine Trockenstrecke eintritt, in der ein Abtropfen überschüssiger Suspension und eine gleichmäßige Trocknung der Suspension erfolgt.

4. Verfahren nach mindestens einem der Ansprüche 1 bis 3, **dadurch gekennzeichnet**, daß die Antrockung an den oben liegenden U-Bögen des Einrohrglasgefäßes beginnt.

5. Verfahren nach mindestens einem der Ansprüche 1 bis 4, **dadurch gekennzeichnet**, daß die Antrocknung mittels trockener Warmluft oder Wärmestrahlung erfolgt.

6. Verfahren nach mindestens einem der Ansprüche 1 bis 5, **dadurch gekennzeichnet**, daß die Suspension das Einrohrglasgefäß während der Beschichtung mehrmals, vorzugsweise zwei- bis viermal, vorwärts und rückwärts durchläuft.

7. Verfahren nach mindestens einem der Ansprüche 1 bis 6, **dadurch gekennzeichnet**, daß die dosierte Menge Suspension der für die Beschichtung benötigten Menge entspricht.

8. Verfahren nach mindestens einem der Ansprüche 1 bis 7, **dadurch gekennzeichnet**, daß Einrohrglasgefäße mit Rohrdurchmessern größer als 8 mm beschichtet werden.

9. Vorrichtung zur Durchführung des Verfahrens nach mindestens einem der Ansprüche 1 bis 8 bestehend aus einem Kettenförderer, Glasgefäßaufnahmen, Rotationsvorrichtungen, einer Dosiereinrichtung und einer Trockenstrecke,
**dadurch gekennzeichnet**,
daß die Glasgefäßaufnahmen (1) mit integrierter Kurvenscheibe (2) auf einem endlosen Kettentrieb montiert und daß vor der Trockenstrecke Rotationsvorrichtungen angeordnet sind, um die Glasgefäßaufnahmen (1) nacheinander in gegenläufige Rotation bei gleichzeitiger Kippbewegung zu versetzen.

10. Vorrichtung nach Anspruch 9, **dadurch gekennzeichnet**, daß die Glasgefäßaufnahmen (1) auf einem Gelenk kugelgelagert sind.

11. Vorrichtung nach Anspruch 9 oder 10, **dadurch gekennzeichnet**, daß die Rotationsvorrichtungen als Drehrichtungsbänder (9, 10) ausgebildet sind.

12. Vorrichtung nach mindestens einem der Ansprüche 9 bis 11, **dadurch gekennzeichnet**, daß die Trockenstrecke als Warmluft- oder als Strahlungstunnel ausgebildet ist.

13. Vorrichtung nach mindestens einem der Ansprüche 9 bis 12, **dadurch gekennzeichnet**, daß eine Glasgefäßaufnahme (1) entlang einer Rotationsvorrichtung drei- bis fünfmal um die eigene Achse rotiert.

14. Vorrichtung nach mindestens einem der Ansprüche 9 bis 13, **dadurch gekennzeichnet**, daß eine integrierte Kurvenscheibe (2) derart geformt ist, daß die Kippbewegung einer Glasgefäßaufnahme (1) sinusförmig erfolgt.

15. Vorrichtung nach mindestens einem der Ansprüche 9 bis 14, **dadurch gekennzeichnet**, daß eine integrierte Kurvenscheibe (2) über eine Reibungskopplung von den Rotationsvorrichtungen bewegt wird.

16. Vorrichtung nach mindestens einem der Ansprüche 9 bis 15, **dadurch gekennzeichnet**, daß insbesondere zwei bis vier Rotationsvorrichtungen vor der Trockenstrecke angeordnet sind.

## Claims

1. Process for coating the inner faces of a meander-shaped single tube glass vessel with suspensions, more particularly fluorescent suspensions, characterised in that the single tube glass vessel after the addition of a dosed amount of suspension in one of the open arms carries out a horizontal and tilting movement rotating axially parallel to a longitudinal axis defined by the straight parts of the meander-shaped single tube glass vessel wherein the arms of the single tube glass vessel between the reversal points of the tilting movement occupy a horizontal position and then the single tube glass vessel is dried with the open tube ends facing downwards.

2. Process according to claim 1 characterised in that the single tube glass vessel is located in a vertical still position during drying of the suspension.

3. Process according to claim 1 or 2 characterised in that the single tube glass vessel after coating with a suspension with the open tube ends facing downwards enters a drying path in which excess suspension drips off and even drying of the suspension is carried out.

4. Process according to at least one of claims 1 to 3 characterised in that drying begins at the U-bends of the single tube glass vessel which lie at the top.

5. Process according to at least one of claims 1 to 4 characterised in that drying is carried out by means of dry hot air or heat radiation.

6. Process according to at least one of claims 1 to 5 characterised in that the suspension runs forwards and backwards through the single tube glass vessel several times, preferably two to four times, during the coating process.

7. Process according to at least one of claims 1 to 6 characterised in that the dosed amount of suspension corresponds to the amount required for coating.

8. Process according to at least one of claims 1 to 7 characterised in that single tube glass vessels with pipe diameters of more than 8 mm are coated.

9. Apparatus for carrying out the process according to at least one of claims 1 to 8 comprising a chain conveyor, glass vessel holders, rotation devices, a dosing apparatus and a drying path,
characterised in that the glass vessel holders (1) are mounted with integrated cam discs (2) on an endless chain drive and that rotation devices are mounted in front of the drying path in order to move the glass vessel holders (1) in succession in opposite rotation during simultaneous tilting movement.

10. Apparatus according to claim 9 characterised in that the glass vessel holders (1) are ball-mounted on a joint.

11. Apparatus according to claim 9 or 10 characterised in that the rotation devices are designed as rotary direction belts (9,10).

12. Apparatus according to at least one of claims 9 to 11 characterised in that the drying path is designed as a hot air or radiation tunnel.

13. Apparatus according to at least one of claims 9 to 12 characterised in that a glass vessel holder rotates along a rotation device three to five times about its own axis.

14. Apparatus according to at least one of claims 9 to 13 characterised in that an integrated cam disc (2) is shaped so that the tilting movement of a glass holder (1) is carried out sinusoidally.

15. Apparatus according to at least one of claims 9 to 14 characterised in that an integrated cam disc (2) is moved through a friction coupling of the rotation devices.

16. Apparatus according to at least one of claims 9 to 15 characterised in that more particularly two to four rotation devices are mounted in front of the drying path.

## Revendications

1. Procédé pour revêtir la surface intérieure d'un récipient sinueux monotubulaire en verre avec des suspensions, en particulier des suspensions fluorescentes, caractérisé en ce que le récipient monotubulaire, après ajout d'une quantité dosée de suspension dans une des branches ouvertes tournant axialement en parallèle avec un axe longitudinal défini par les tronçons droits du récipient sinueux monotubulaire en verre, est soumis à un mouvement horizontal et à un mouvement de bascule, les branches du récipient monotubulaire en verre adoptant une position horizontale entre les points de renversement du mouvement de bascule et le récipient monotubulaire en verre étant ensuite séché avec les embouts ouverts vers le bas.

2. Procédé selon la revendication 1, caractérisé en ce que le récipient monotubulaire en verre se trouve dans une position verticale de repos pendant le séchage de la suspension.

3. Procédé selon la revendication 1 ou 2, caractérisé en ce qu'après le revêtement avec une suspension, le récipient monotubulaire en verre pénètre avec les embouts ouverts vers le bas dans une section de séchage dans laquelle interviennent un égouttage de la suspension excédentaire et un séchage uniforme de la suspension.

4. Procédé selon au moins une des revendications 1 à 3, caractérisé en ce que le séchage commence au niveau des coudes en U situés au-dessus du récipient monotubulaire en verre.

5. Procédé selon au moins une des revendications 1 à 4, caractérisé en ce que le séchage s'effectue au moyen d'air chaud sec ou d'un rayonnement de chaleur.

6. Procédé selon au moins une des revendications 1 à 5, caractérisé en ce que pendant le revêtement, la suspension parcourt plusieurs fois, de préférence deux à quatre fois, le récipient monotubulaire en verre vers l'avant et vers l'arrière,

7. Procédé selon au moins une des revendications 1 à 6, caractérisé en ce que la quantité dosée de suspension correspond à la quantité requise pour le revêtement.

8. Procédé selon au moins une des revendications 1 à 7, caractérisé en ce que des récipients monotubulaires en verre ayant des diamètres de tube supérieurs à 8 mm sont revêtus.

9. Dispositif pour mettre en oeuvre le procédé selon au moins une des revendications 1 à 8 constitué d'un transporteur à chaîne, de logements pour récipient en verre, de dispositifs de rotation, d'un dispositif de dosage et d'une section de séchage, caractérisé en ce que les logements (1) de récipient de verre ayant un disque (2) à came intégré sont montés sur une propulsion à chaîne sans fin et en ce que des dispositifs de rotation sont disposés avant la section de séchage pour faire tourner l'un après l'autre les logements (1) de récipient en verre en sens opposé en réalisant en même temps le mouvement de bascule.

10. Dispositif selon la revendication 9, caractérisé en ce que les logements (1) de récipient en verre sont montés sur roulements à billes sur une articulation.

11. Dispositif selon la revendication 9 ou 10, caractérisé en ce que les dispositifs de rotation sont formés par des bandes (9, 10) imposant un sens de rotation.

12. Dispositif selon au moins une des revendications 9 à 11, caractérisé en ce que la section de séchage est conformée comme un tunnel d'air chaud ou un tunnel de rayonnement.

13. Dispositif selon au moins une des revendications 9 à 12, caractérisé en ce qu'un logement (1) de récipient en verre tourne trois à cinq fois autour de son propre axe le long d'un dispositif de rotation.

14. Dispositif selon au moins une des revendications 9 à 13, caractérisé en ce qu'un disque (2) à came intégré est formé de telle sorte que le mouvement de bascule d'un logement (1) de récipient de verre s'effectue de manière sinusoïdale.

15. Dispositif selon au moins une des revendications 9 à 14, caractérisé en ce qu'un disque (2) à came intégré est mû par les dispositifs de rotation par le biais d'un accouplement à friction.

16. Dispositif selon au moins une des revendications 9 à 15, caractérisé en ce qu'en particulier, deux à quatre dispositifs de rotation sont disposés avant la section de séchage.
